# EUROPÄISCHE PATENTSCHRIFT

(11) **EP 3 426 445 B1**
(45) Veröffentlichungstag und Bekanntmachung des Hinweises auf die Patenterteilung: **22.05.2024**
(21) Anmeldenummer: 17712039.1
(22) Anmeldetag: 07.03.2017
(51) Int. Cl.: B25J 9/16, B23Q 17/22, G05B 19/401

(54) **ACHSENKALIBRIEREN EINER STRAHLBEARBEITUNGSMASCHINE**
AXIS CALIBRATION OF A BEAM MACHINING MACHINE
PROCÉDÉ DE CALIBRAGE DE L'AXE D'UNE MACHINE DE TRAITEMENT PAR FAISCEAU

(30) Priorität: 09.03.2016 DE 102016104318
(43) Veröffentlichungstag der Anmeldung: 16.01.2019
(73) Patentinhaber: Trumpf Laser- und Systemtechnik GmbH, 71254 Ditzingen (DE)
(72) Erfinder: HAGENLOCHER, Tobias, 71254 Ditzingen (DE); KIEWELER, Thomas, 71299 Wimsheim (DE)
(74) Vertreter: Grättinger Möhring von Poschinger Patentanwälte Partnerschaft mbB
(86) Internationale Anmeldenummer: PCT/EP2017/055325
(87) Internationale Veröffentlichungsnummer: WO 2017/153408

(56) Entgegenhaltungen:
- DE-A1- 19 916 081
- DE-C1- 10 150 129
- JP-A- H04 339 582
- US-A1- 2008 078 751
- US-A1- 2013 178 972

## Beschreibung

Die vorliegende Erfindung betrifft ein Verfahren zur Bestimmung einer Abweichung einer räumlichen Ausrichtung einer Strahlachse einer Strahlbearbeitungsmaschine von einer räumlichen Soll-Ausrichtung der Strahlachse und eine Strahlbearbeitungsmaschine zum Bearbeiten eines Werkstücks, siehe z.B. DE 101 50 129 C1 oder US 2013/0178972 A1.

In strahlbasierten, insbesondere laserbasierten, Werkzeugmaschinen ist ein exaktes Positionieren einer Strahlachse (z.B. Laserstrahlachse oder Elektronenstrahlachse) grundlegend für die Umsetzung der präzisen Bearbeitung von Werkstücken mit dem sich entlang der Strahlachse auf das Werkstück ausbreitenden Bearbeitungsstrahl. Allgemein weisen Werkzeugmaschinen hierzu Translationssysteme und Drehsysteme auf, die ein genaues Positionieren und Ausrichten des Bearbeitungsstrahls bezüglich des zu bearbeitenden Werkstücks erlauben. Beispielsweise werden in sogenannten 5-Achs-Lasersystemen drei orthogonale Translationsbewegungen und zwei Drehbewegungen für die Strahlachse bereitgestellt. Ferner können entsprechend Translations- und Drehbewegungen für das gehaltene Werkstück vorgesehen werden.

Bei Inbetriebnahme einer Werkzeugmaschine erfolgt üblicherweise eine Anfangseinstellung der Positioniersysteme und des Strahlengangs, wobei die Anfangseinstellung beispielsweise an die verschiedenen (z.B. laserstrahlführenden) Strahlführungskomponenten wie Bearbeitungsoptiken angepasst werden. Bei entsprechender Justierung der Werkzeugmaschine entspricht dann eine räumliche Ausrichtung einer Strahlachse der Werkzeugmaschine der gewünschten räumlichen Ausrichtung (Soll-Ausrichtung) der Strahlachse. Entsprechende Steuerungsparameter für die verschiedenen Verstellmechanismen wie Schrittmotoren und Antriebsscheiben, hierin auch als Bearbeitungsparameter bezeichnet, werden in der Steuerungsvorrichtung, beispielsweise in einer NC-Steuerung, hinterlegt. Da während des Betriebs der Werkzeugmaschine Fehlstellungen eintreten können, kann eine Nachjustierung der Bearbeitungsparameter erforderlich werden. Fehlstellungen gehen beispielsweise auf eine Kollision einer Bearbeitungsoptik mit dem Werkstück zurück.

DE 10 2007 063 627 A1 offenbart ein Verfahren zur Bestimmung der Düsenmittigkeit. In dem Verfahren wird zunächst mit dem Düsenkörper und anschließend mit dem Laserstrahl ein Rahmen angetastet. Durch Vergleichen der Werte kann die Lage des Laserstrahls relativ zur Öffnung der Düse bestimmt werden. Ferner offenbart JP 6328281 das Schneiden eines runden Lochs, welches anschließend mit der Düse zur Bestimmung der Düsenmittigkeit angetastet wird.

DE 101 50 129 C1 offenbart ein Verfahren zum Kalibieren einer Laserbearbeitungsmaschine, bei der mit einem Sensor die tatsächliche Auftreffposition des zum Strukturieren oder Belichten eines Substrats verwendeten Laserstrahls auf der Oberfläche des Substrats erfassbar ist. Dabei wird aus möglichen Abweichungen der tatsächlichen Auftreffposition des Laserstrahls von einer gewünschten Auftreffposition ein Korrekturfaktor für das Ansteuern einer Ablenkeinheit, mit der der Laserstrahl über die Oberfläche des Substrats abgelenkt wird, ermittelt.

US 2013/178972 A1 offenbart ein System und ein Verfahren zum Kalibrieren einer Laserbearbeitungsmaschine, wobei eine Kalibrierungsplatte das Bearbeitungsstück simuliert.

JP H04 339582 A offenbart ein Verfahren, bei dem eine Schnittbreite eines mit einem Laserstrahl geschnittenen Schnitts detektiert wird, um eine Verschlechterung der Schneidgenauigkeit durch eine Änderung der Leistung des Laserstrahls im Laufe der Zeit und eine Fehlausrichtung einer optischen Achse zu erfassen.

US 2008/078751 A1 offenbart einen Kalibrierungstestzyklus, bei dem ein Testmuster in das ausgewählte Substrat geschnitten und analysiert wird. Basierend auf dem Ergebnis der Analyse passt das System die Betriebsparameter des Laserschneidens während eines nachfolgenden Produktionsablaufs unter Verwendung desselben Strahlsubstrattyps an.

DE 199 16 081 A1 offenbart ein Verfahren, bei dem eine Anzahl von Markierungen mit einem Laserstrahl auf ein Werkstück aufgebracht werden. Für jede Markierung ist die Ablenkeinheit auf eine bestimmte Referenzstelle stationär eingestellt. Der tatsächliche Ort der Markierung wird bestimmt und mit dem Referenzort verglichen, um einen Korrekturwert abzuleiten. Dieser wird einer Steuereinheit zugeführt, die dann die Intensität und/oder die Ablenkung des Laserstrahls über den Ablenkbereich steuert.

Einem Aspekt dieser Erfindung liegt die Aufgabe zugrunde, ein Verfahren anzugeben, dass eine zumindest teilautomatisierte Einstellung von Drehachsen erlaubt.

Zumindest eine dieser Aufgaben wird gelöst durch ein Verfahren nach Anspruch 1 und durch eine Vorrichtung zur Materialbearbeitung nach Anspruch 11. Weiterbildungen sind in den Unteransprüchen angegeben.

In einem Aspekt umfasst ein Verfahren die Bestimmung einer Abweichung einer räumlichen Ausrichtung einer Strahlachse einer Strahlbearbeitungsmaschine von einer räumlichen Soll-Ausrichtung der Strahlachse, wobei die Strahlbearbeitungsmaschine eine zu kalibrierende Rotationsachse und ein Messmittel aufweist, die folgenden Schritte: Schneiden von Konturabschnitten mit einem Bearbeitungsstrahl in ein Testwerkstück von zwei Seiten, wobei die Konturabschnitte zu einer Soll-Ausrichtung der zu kalibrierenden Rotationsachse parallel verlaufen, Detektieren der Konturabschnitte mit dem Messmittel von einer Seite des Testwerkstücks zur Ermittlung der räumlichen Lage der Konturabschnitte und und Bestimmen der Abweichung der räumlichen Ausrichtung der Strahlachse der Strahlbearbeitungsmaschine von der räumlichen Soll-Ausrichtung basierend auf den räumlichen Lagen der Konturabschnitte im Vergleich zu Soll-Lagewerten, die einem Schneiden bei einer Soll-Ausrichtung zugeordnet sind.

In einem weiteren Aspekt betrifft ein Verfahren die Bestimmung einer Abweichung einer räumlichen Ausrichtung einer Strahlachse einer Strahlbearbeitungsmaschine von einer räumlichen Soll-Ausrichtung der Strahlachse eine Strahlbearbeitungsmaschine zum Bearbeiten eines Werkstücks mit einem entlang der Strahlachse geführten Bearbeitungsstrahl. Die Strahlbearbeitungsmaschine ist insbesondere zum Halten eines plattenartigen Testwerkstücks mit zwei durch im Wesentlichen eine gemeinsame Flächennormalenausrichtung definierten Oberflächen ausgebildet und umfasst mindestens eine Translationsachse zur Herstellung einer Translationsbewegung zwischen dem Testwerkstück und der Strahlachse, mindestens eine Rotationsachse mit einem Drehbereich von mindestens 180° zur Ausrichtung der Strahlachse in Winkelstellungen um eine Soll-Ausrichtung der mindestens einen Rotationsachse und ein Messelement. Das Verfahren weist die folgenden Schritte auf:
- Bereitstellen des Testwerkstücks in einer Halteposition, in der die Soll-Ausrichtung der Strahlachse in einer ersten Winkelstellung und einer dazu um 180° gedrehten zweiten Winkelstellung jeweils entlang der Flächennormalenausrichtung zur Bearbeitung des Testwerkstücks ausgerichtet werden kann,
- Positionieren der Strahlachse in einer ersten Lage, in der die Soll-Ausrichtung der Strahlachse in der ersten Winkelstellung ist und der Bearbeitungsstrahl auf eine der Oberflächen gerichtet ist,
- Durchführen eines ersten Konturschnitts mit dem Bearbeitungsstrahl mit einem zur Soll-Ausrichtung der Rotationsachse parallel verlaufenden Vorderseitenkonturabschnitt,
- Positionieren der Strahlachse in einer zweiten Lage, in der die Soll-Ausrichtung der Strahlachse in der zweiten Winkelstellung ist und der Bearbeitungsstrahl auf die andere der Oberflächen gerichtet ist,
- Durchführen eines zweiten Konturschnitts mit dem Bearbeitungsstrahls mit einem zur Soll-Ausrichtung der Rotationsachse und damit zum Vorderseitenkonturabschnitt parallel verlaufenden Rückseitenkonturabschnitt,
- Formen mindestens einer an den Vorderseitenkonturabschnitt und/oder an den Rückseitenkonturabschnitt angrenzenden Aussparung im Werkstück,
- Antasten des Vorderseitenkonturabschnitts und des Rückseitenkonturabschnitt mit dem Messelement mit der gleichen Winkelstellung zur Ermittlung der räumlichen Lage des Vorderseitenkonturabschnitts und der räumlichen Lage des Rückseitenkonturabschnitts und
- Ableiten der Abweichung der räumlichen Ausrichtung der Strahlachse der Strahlbearbeitungsmaschine von der räumlichen Soll-Ausrichtung basierend auf der räumlichen Lage des Vorderseitenkonturabschnitts und der räumlichen Lage des Rückseitenkonturabschnitts.

In einem weiteren Aspekt weist eine Strahlbearbeitungsmaschine zum Bearbeiten eines Werkstücks eine Werkstückhalterung zum Positionieren eines Werkstücks, insbesondere eines Testwerkstücks, und ein Strahlführungssystem zum Bereitstellen eines entlang einer Strahlachse geführten Bearbeitungsstrahls auf. Die Strahlbearbeitungsmaschine weist mindestens eine Translationsachse zur Herstellung einer Translationsbewegung zwischen dem Testwerkstück und der Strahlachse und mindestens eine Rotationsachse mit einem Drehbereich von mindestens 180° zur Ausrichtung der Strahlachse in Winkelstellungen um eine Soll-Ausrichtung der mindestens einen Rotationsachse auf. Ferner weist die Strahlbearbeitungsmaschine ein Messelement zum Antasten einer Schnittkante und eine Steuerungsvorrichtung zum Durchführen der zuvor erläuterten Verfahren auf.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig.1: eine schematische räumliche Darstellung eines Koordinatensystems eines 5-NC-Achsensystems für Werkzeugmaschinen,
- Fig. 2: eine schematische Seitenansicht eines beispielhaften Strahlengangs in einem Strahlzuführungssystem mit einem Bearbeitungskopf,
- Fig. 3: ein schematisches Flussdiagramm zur Verdeutlichung eines beispielhaften Ablaufs einer BC-Korrektur gemäß den hierin offenbarten Konzepten,
- Fig. 4: eine 3D-Ansicht einer beispielhaften Messdüse,
- Fig. 5: eine schematische Darstellung zur Verdeutlichung eines beispielhaften Schneidvorgangs mit einer Werkzeugmaschine,
- Fig. 6A-C: schematische Darstellungen zur Verdeutlichung von Fehlverläufen der Strahlachse,
- Fig. 7: eine schematische Darstellung zur Verdeutlichung eines beispielhaften Vorderseitenschneidvorgangs,
- Fig. 8: eine schematische Darstellung zur Verdeutlichung eines beispielhaften Rückseitenschneidvorgangs,
- Fig. 9: eine schematische Darstellung zur Verdeutlichung eines beispielhaften Antastvorgangs,
- Fig. 10A-1OC: schematische Darstellungen von beispielhaften Schneidkonturen und
- Fig. 11: eine schematische Darstellung von beispielhaften Schneidkonturen mit mindestens zwei Paaren von gegenüberliegenden Konturabschnitten.

Hierin beschriebene Aspekte basieren zum Teil auf der Erkenntnis, dass insbesondere mithilfe einer zumindest minimal schneidfähigen Messdüse Kinematiksetuparbeiten in Strahlbearbeitungsmaschine (z.B. laserbasierten Werkzeugmaschinen) teilautomatisiert werden können. Dies betrifft insbesondere die Kalibration der B-Achse und/oder der C-Achse und die Düsenmittigkeitsbestimmung.

Ferner beruht das hierin offenbarte Konzept darauf, dass durch eine rechnerische und/oder Messverfahren-bedingte Egalisierung des koaxialen Offsets zwischen Strahl und Messdüse ein exaktes Vermessen von Testschnittverläufen, z.B. Kanten eines Test-Rechtecks, ermöglicht werden kann. So wurde erkannt, dass derartige Konzepte ein Bestimmen eines eventuell vorliegenden Kinematikfehlers unter Ausnutzung von Achsredundanzen ermöglichen können. Bestimmte Kinematikfehler können bei Bedarf im Rahmen einer numerischen Ansteuerung korrigiert werden.

Das hierin beschriebene Vorgehen bezieht sich insbesondere auf eine Werkzeugmaschine, die über fünf numerisch ansteuerbare (NC-) Achsen verfügt, wobei die Integration weiterer NC-Achsen allgemein möglich ist. Die Werkstückbearbeitung erfolgt beispielsweise mit einem entlang eines gewünschten Schnittverlaufs geführten Laserstrahl.

Üblicherweise wird die Geometrie der Kinematik von 5-Achs-Lasermaschinen mathematisch in der Maschinensteuerung hinterlegt. Insbesondere werden Abweichungen vom Ideal als Versatzmaße des Fokuspunkts, der hierein auch als TCP (Tool Center Point) bezeichnet wird, hinterlegt. Dies kann beispielsweise basierend auf Nullstellung(en) einer oder mehrerer Orientierungsachsen für die in der Steuerung hinterlegte(n) Transformation(en) zwischen dem Werkstückbezugssystem und dem Maschinenbezugssystem erfolgen.

Die hierin offenbarten Konzepte können beispielsweise teilautomatisierte Einstellprozeduren zur Bestimmung der Versatzmaße und der Kalibrierung der Orientierungsachsen ermöglichen, um die genaue Position des TCPs im Raum zu ermitteln und zu gewährleisten. Basierend auf den vorgeschlagenen Konzepten kann ferner die Lage des Laserstrahls zur Bearbeitungsdüse erkannt und bevorzugt eine Konzentrizität des Laserstrahls zur Bearbeitungsdüse eingestellt werden. Das Einstellprozeduren können ferner unter Verwendung von Aktoren an der Bearbeitungsoptik auch vollautomatisiert umgesetzt werden. Das kann durch Verschieben beispielsweise eines Strahlführungsrohrs als auch über die Positionierung einer Fokussierlinse innerhalb der Bearbeitungsoptik durchgeführt werden.

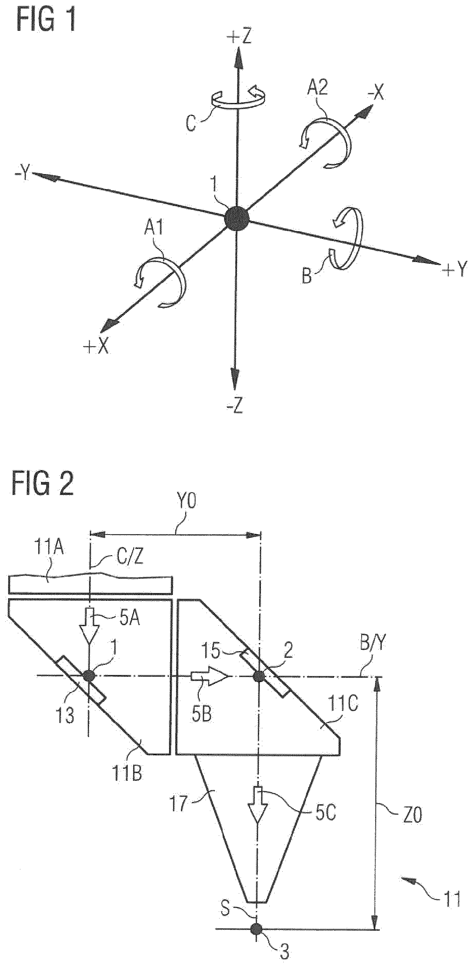

Fig. 1 zeigt zur Verdeutlichung der NC-Achsen ein Maschinenbezugssystem mit einer X-Achse für eine horizontale Fahrbewegung z.B. eines Auslegers längs zu einem Maschinenkörper, einer Y-Achse für eine horizontale Fahrbewegung z.B. eines Y-Schlittens und einer Z-Achse für eine vertikale Fahrbewegung z.B. einer Z-Pinole.

Ferner ist in Fig. 1 eine mögliche Schwenkbewegung einer Bearbeitungsoptik um die Y-Achse, die sogenannte B-Achse, angedeutet. Übliche Schwenkwinkel liegen im Bereich von z.B. ±135°. Des Weiteren ist in Fig. 1 eine mögliche Drehbewegung der Bearbeitungsoptik um die Z-Achse, die sogenannte C-Achse, angedeutet. Die C-Achse kann eine Einfach- oder Mehrfachrotation der Bearbeitungsoptik erlauben. Derartige Bewegungsmöglichkeiten bieten beispielsweise in der 5-Achs-Lasermaschine TruLaser Cell 7000 eine hochflexibles System zum zwei- oder dreidimensionalen Schneiden und Schweißen.

In der in Fig. 1 gezeigten Nullstellung der C-Achse verläuft die B-Achse entlang der Y-Achse. Im dargestellten Fall des Maschinenbezugssystem bezieht sich die Weginformation für die X-, Y- und Z-Achsen auf die Koordinaten bezüglich eines Drehpunkts 1, der im Schnittpunkt der B-Achse mit der C-Achse liegt. Beispielsweise stellt ein Winkelgetriebe die Drehungen um die B-Achse und um die C-Achse bereit.

Zur Vollständigkeit sind in Fig. 1 ferner beispielhaft Bewegungsachsen für ein eingespanntes Werkstück gezeigt. Eine A1-Werkstückachse erlaubt eine Drehbewegung des Werkstücks im linken Arbeitsbereich und eine A2-Werkstückachse eine Drehbewegung des Werkstücks im rechten Arbeitsbereich. Das Werkstück kann beispielsweise jeweils waagerecht oder senkrecht eingespannt werden. Beispielsweise können eine oder mehrere der Translationsachsen X, Y und Z auch durch einen Bewegung des Werkstücks umgesetzt werden.

Fig. 2 zeigt eine beispielhafte Umsetzung der B-Achse und der C-Achse mit zwei Winkeleinstelleinheiten (nicht gezeigt) zum Positionieren und Ausrichten einer aus einem Bearbeitungskopf 11 austretenden Strahlachse S. Man erkennt die entlang der Z-Achse verlaufende C-Achse, den Drehpunkt 1 sowie die in der Zeichenebene von links nach rechts verlaufende B-Achse. Es ist die Nullstellung der C-Achse angenommen, so dass die B-Achse wie in Fig. 1 entlang der Y-Achse verläuft. Die Nullstellung der Fig. 2 wird üblicherweise mit Winkelsteuerungsparameter (B0,C0) beschrieben, d.h. es liegt kein Drehwinkel (0°) für eine Drehung aus der Nullstellung sowohl für die B-Achse als auch die C-Achse vor.

Der optische Strahlengang verläuft im Idealfall entlang der C-Achse entlang einer Strahlführungseinheit 11A in eine erste Umlenkeinheit 11B. Am Drehpunkt 1 auf einem ersten Ablenkspiegel 13 wird der Strahlengang auf die B-Achse abgelenkt und tritt in eine zweite Umlenkeinheit 11C ein. An einem Punkt 2 auf einem zweiten Ablenkspiegel 15 wird der Strahlengang ein zweites Mal umgelenkt, verläuft evtl. durch abschließende Fokussierelemente und eine an der zweiten Umlenkeinheit 11C befestigten Bearbeitungsdüse 17 zu einem Fokuspunkt 3, der zuvor auch als TCP (Tool Center Point) bezeichnet wurde. Der letzte Abschnitt des Strahlengangs definiert die Strahlachse S für die Werkstückbearbeitung. Die Bearbeitungsdüse 17 kann z.B. eine Schneid-, Schweiß- oder Multifunktionsdüse für die entsprechenden Bearbeitungsmodi der Werkzeugmaschine sein.

Der Strahlengang wird entlang der Z/C-Achse durch einen Pfeil 5A, zwischen dem Drehpunkt 1 und dem Punkt 2 durch einen Pfeil 5B und entlang der (idealen) Strahlachse durch einen Pfeil 5C in Fig. 2 verdeutlicht. Ein ideale Justierung angenommen erfolgt die Ablenkung an den Ablenkspiegeln jeweils um 90°. Die Pfeile 5A-5C verdeutlichen die Ausbreitung eines ideal entlang der Z/C-Achse eingekoppelten Laserstrahls.

Mithilfe einer der Winkeleinstelleinheiten ist der erste Ablenkspiegel 13 um die Z-Achse drehbar und stellt den Freiheitsgrad der C-Achse bereit, wobei der Drehpunkt 1 (die idealer Justierung angenommen) stationär bleibt. Der zweite Ablenkspiegel 15 dreht mit dem ersten Ablenkspiegel 13 mit. Er ist ebenfalls mithilfe einer der Winkeleinstelleinheiten drehbar ausgebildet, um den Freiheitsgrad der B-Achse bereitzustellen. Die idealer Justierung angenommen verbleibt der Punkt 2 bei einer Drehung nur um die B-Achse stationär.

In der in Fig. 2 gezeigten Nullstellung der B- und C-Achsen befindet sich der TCP 3 im Abstand Y0 entlang der Y-Achse und im Abstand Z0 entlang der Z-Achse vom Drehpunkt 1.

Die Antriebsmotoren der Winkeleinstelleinheiten der B- und C-Achse sind beispielsweise Motoren mit Absolutwertgebern. Diese Motoren werden üblicherweise bei Inbetriebnahme auf die Absolutposition 0° referenziert. Geht diese Referenzierung verloren, z.B. nach einer Kollision der Bearbeitungsdüse 17 mit einem Werkstück, müssen die NC-Achsen, insbesondere die B-Achse und/oder die C-Achse erneut referenziert werden.

Zur Bearbeitung eines Werkstückes wird der TCP 3 anhand einer vorbestimmten programmierten Bahn über das Werkstück geführt. Die Geometrie der Kinematik ist dazu mathematisch in der Steuerung hinterlegt ist, so dass für eine bestimmte Position und Orientierung des Laserstrahls im Werkstückbezugssystem die entsprechenden Achsstellungen der Antriebe im Maschinenbezugssystem rückgerechnet werden können (Transformation). Die aktuelle, die jeweilige Anlage beschreibende, Kinematik kann mithilfe eines Satz von Versatzmaßen in der Steuerung hinterlegt und bei der Transformation berücksichtigt werden.

Besteht die Vermutung einer Dejustage, kann die Stellung der B- und/oder C-Achse z.B. durch Abfahren einer Referenzfläche an der Bearbeitungsdüse 17 überprüft werden, beispielsweise mit einer mechanischen Messuhr zur groben Bestimmung und Ausrichtung der Orientierung der B- und C-Achse. Bei Feststellung einer Abweichung von einem Referenzwert werden die B- und/oder C-Achsen neu kalibriert. Ferner können die B- und/oder C-Achsen neu in festen zeitlichen Kontrollabständen kalibriert werden.

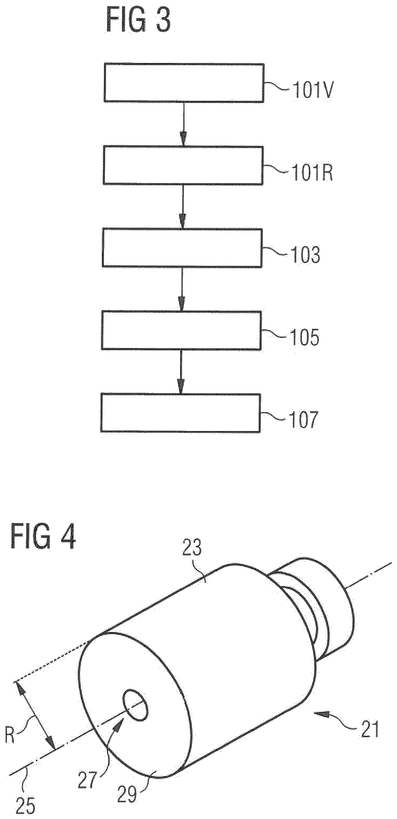

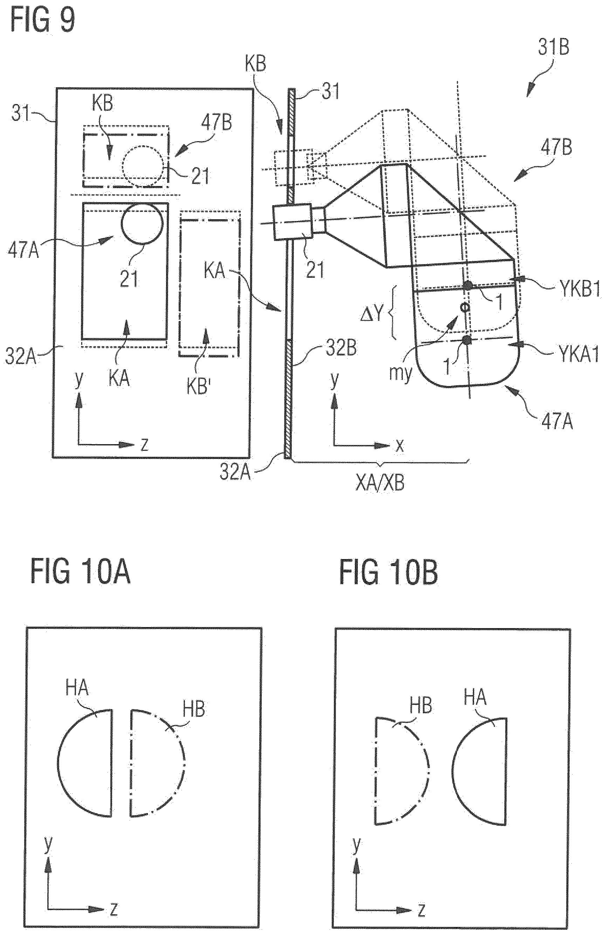

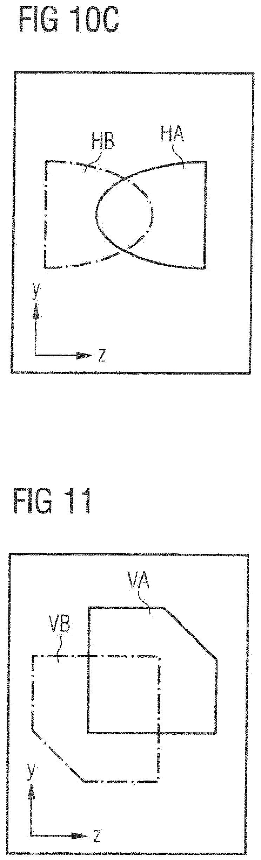

Im Folgenden wird unter Bezugnahme auf die Figuren 3 bis 9 eine beispielhafte (teil-) automatisierte B- und/oder C-Kalibration zur Einstellung der Winkelsteuerungsparameter, insbesondere der Nulllage der BC-Achsen, beschrieben. Die Figuren 10 und 11 verdeutlichen anschließend beispielhaft Schneidkonturen, die für eine B- und/oder C-Kalibration eingesetzt werden können.

Eine BC-Kalibration erlaubt eine Einstellung der Absolutpositionen der Antriebe für die B-Achse und die C-Achse. Die Kalibration wird beispielhaft anhand der B-Achsen-Kalibration näher erläutert. Allgemein kann das hierin vorgeschlagene Kalibrationskonzept auch auf nur eine Drehachse (z.B. die B- oder die C-Achse) angewandt werden.

Die BC-Kalibration umfasst einen Vorderseitenschneidvorgang (Schritt 101V in Fig. 3) und einen Rückseitenschneidvorgang (Schritt 101R), an den sich Antastvorgänge (Schritt 103), eine Auswertung (Schritt 105) sowie evtl. die Übernahme von neuen Nullpunktparametern (Schritt 107) anschließen.

Die Kalibration basiert auf einem Antasten (durchgeführt von einer Seite) eines zuvor an einem Testwerkstück von zwei Seiten vorgenommenen Ausschnitts. Zum Gewährleisten eines einfach zu verarbeitenden Antastmesswerts ist die Geometrie der Düse im Bereich des räumlichen Antastens ein vorgegebener Eingangsparameter. Beispielsweise kann die Bearbeitungsdüse 17 durch eine Messdüse ersetzt oder ein Messdüsenansatz auf der Bearbeitungsdüse 17 angebracht werden oder die Geometrie der Bearbeitungsdüse 17 kann entsprechend ausgeführt sein. Allgemein liegt die Geometrie der Düse/Messdüse der Datenverarbeitung als zu berücksichtigende Information vor oder kann mithilfe einer RF-ID der Düse eingelesen werden. Die Schneidvorgänge setzten insbesondere voraus, dass der Bearbeitungsstrahl die Düse nicht streift und entsprechend eine gewisse Mindeststrahlmittigkeit gegeben ist.

Fig. 4 zeigt eine beispielhafte Messdüse 21, die eine für den Antastvorgang günstige Geometrie aufweist. Die Messdüse 21 ist zylinderförmig ausgebildet, so dass sich eine Zylindermantelfläche 23 im gleichen radialen Abstand R entlang der Zylinderachse erstreckt. Im monierten Zustand verläuft der Bearbeitungsstrahl in einer Strahlführungsöffnung 27 durch die Messdüse 21 und die Zylinderachse bildet eine ideale Strahllage 25 (Soll-Ausrichtung). Die Zylindermantelfläche 23 erlaubt ein seitliches Antasten einer Schnittkante, wobei auch bei einer nicht-orthogonalen Ausrichtung der Messdüse zu einer Messebene beim Antasten in entgegengesetzte Richtungen im Wesentlichen immer der gleich Versatz der idealen Strahllage 25 zum Kontaktpunkt auf der Zylindermantelfläche 23 besteht. Ferner weist die Messdüse 21 eine definierte, insbesondere im Wesentlichen orthogonal zur idealen Strahllage 25 verlaufende kreisförmige Frontantastfläche 29 auf. Diese kann dazu verwendet werden, um grob die Lage des Werkstücks zu ermitteln. Ebenso ist es möglich die Werkzeuglänge zu bestimmen, wobei die Genauigkeit des Verfahrens mit dem Radius R der Messdüse abnehmen kann. Die Messdüse 21 ist schneidfähig ausgebildet, d.h. sie erlaubt es, eine Kontur in einem beispielsweise 1 mm bis 2 mm dicken Blech auszuschneiden.

Die Abstandsregelung basiert beispielsweise auf einer kapazitiven Messung. Die Kapazität bildet sich dabei zwischen der Schneiddüse (bzw. Messdüse) zum Werkstück aus. Die gemessene Kapazität kann von der Geometrie der Werkstückoberfläche als auch der eingesetzten Düse abhängen. Sollte die Düse gewechselt werden, wird üblicherweise eine Kennlinie aufgenommen, welche die ausgebildete Kapazität zum Abstand beschreibt. Da sich die Geometrie der Messdüse von der Schneiddüse unterscheiden, wird die Kennlinie üblicherweise mit dem aktuellen Rüstzustand neu aufgenommen. Es wird angemerkt, dass die Schneidqualität durch den Abstand zwischen Düse und Werkstück beeinflusst werden kann. Da es beim genauen Messen auf eine gute Kantenqualität ankommt, kann das Ergebnis der Kalibrierung durch eine mangelhafte Abstandsmessung nachteilig beeinflusst werden.

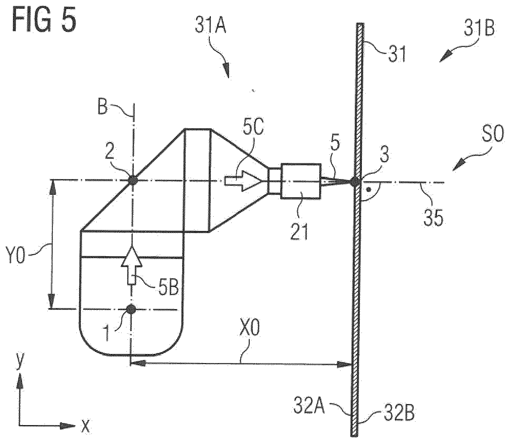

Fig. 5 verdeutlicht allgemein einen Schneidvorgang mit der Orientierung (den Bearbeitungsparametern) (B90, C0), wie er beispielsweise für den Vorderseitenschneidvorgang (Schritt 101V) der BC-Kalibration eingesetzt werden kann. Ein Testwerkstück 31 wird in die beispielsweise YZ-Ebene des in Fig. 1 gezeigten Bezugssystems in eine Werkzeugmaschine eingespannt. Oberflächen 32A, 32B des Testwerkstücks 31 sind entsprechend in die (-X)-Richtung (d.h. in Richtung einer Vorderseite 31A bzgl. des Testwerkstücks 31) und (+X)-Richtung (d.h. in Richtung einer Rückseite 31B bzgl. des Testwerkstücks 31) ausgerichtet und haben entsprechend eine Flächennormalenausrichtung entlang der X-Achse. Das Testwerkstück 31 kann z.B. ein planes Test-Blech mit einer Dicke von beispielsweise 1 mm sein, das sich mit der Messdüse 21 schneiden lässt.

Die Darstellung des in Fig. 5 gezeigten Schneidvorgangs verdeutlicht die Situation einer idealen Justage, d.h. korrekt eingestellte Absolutpositionen für die B-Achse und die C-Achse. Entsprechend trifft der Laserstrahl 5 orthogonal auf das Testwerkstück 31. Fig. 5 zeigt einen entsprechenden Idealstrahlengang 35, der senkrecht zu den Oberflächen 32A, 32B des plattenförmigen Testwerkstücks 31 verläuft. Auch die Strahlachse S ist orthogonal auf das Testwerkstück 31 ausgerichtet. Der Idealstrahlengang 35 gewährleistet eine Soll-Ausrichtung S0 der Strahlachse für jede Winkelstellung der B- und C-Achsen, wobei die Soll-Ausrichtung S0 nur durch die Bearbeitungsparameter für die Werkzeugorientierung gegeben ist.

Bei der in Fig. 5 gezeigten Nullstellung der C-Achse und der 90°-Stellung der B-Achse befindet sich der TCP 3 im Abstand Y0 entlang der Y-Achse und im Abstand X0 entlang der X-Achse vom Drehpunkt 1. Der Abstand X0 bei den vorliegenden Bearbeitungsparametern (B90, C0) entspricht dem Abstand Z0 in Fig. 2. Der TCP 3 liegt im Testwerkstück 31, so dass mit der Messdüse 21 eine Kontur in das Testwerkstück 31 geschnitten werden kann. Zur Verdeutlichung ist in Fig. 5 ein in den TCP 3 fokussierte Laserstrahl 5 schematisch angedeutet. Bei einer idealen Justierung verläuft der Strahlengang des Laserstrahls 5 gemäß den analog zu Fig. 2 eingezeichneten Pfeilen 5B, 5C entlang der B-Achse bzw. entlang der Strahlachse 35.

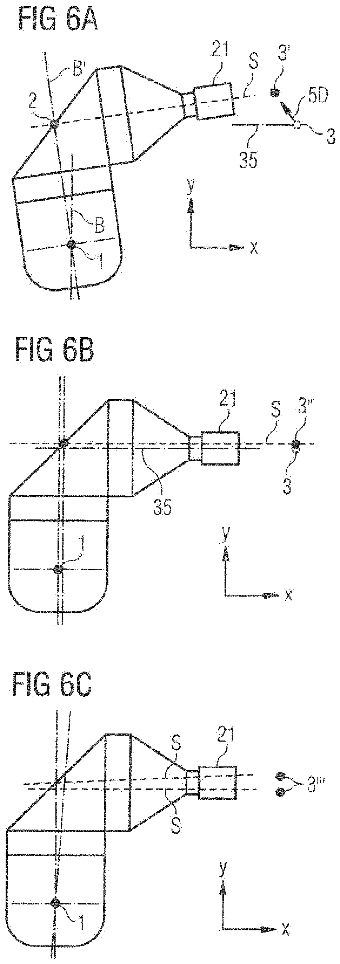

Die Figuren 6A bis 6C zeigen mögliche Fehlverläufe der Strahlachse bzgl. der in Fig. 5 gezeigten Idealjustage.

Fig. 6A verdeutlicht den Fall, dass beispielsweise durch Anstoßen an einem Werkstück die Winkeleinstelleinheit der C-Achse aus der ursprünglichen Nullstellung bewegt wurde. In Fig. 6A ist die neue Ausrichtung der Strahlachse bei Fehlstellung C-Achse und entsprechend verdrehte B-Achse 90° (in Fig. 6A gestrichelt und mit B' gekennzeichnet) zur ursprünglichen Ausrichtung der B-Achse in Y-Richtung (in Fig. 6A strich-punktiert dargestellt) um wenige Grad verdreht angedeutet. Der Strahlengang wie die Ablenkungen um 90° sowie der zentraler Durchgang der Strahlachse S durch die Messdüse 21 wurde durch den Stoß nicht beeinflusst, so dass TCP 3' auf einem Kreis in Richtung des Pfeils 5D um den Drehpunkt 1 um wenige Grad verdreht vom TCP 3 zum Liegen kommt. Die Soll-Ausrichtung S0 - illustriert in Fig. 6A durch den Idealstrahlengang 35 - weicht somit von der Ausrichtung der Strahlachse S durch einen Drehwinkel ab.

Fig. 6B verdeutlicht den Fall, dass z.B. durch einen Parallelversatz des Eingangsstrahls zur C-Achse zwar die Ablenkung an den Ablenkspiegeln 13, 15 um jeweils 90° erhalten bleibt, jedoch der Laserstrahl nicht mehr entlang der C- und B-Achse verläuft. Die Richtung und Größe des Strahlversatzes kann (als mechanische Abweichung und/oder optischer Fehler) dabei von den jeweiligen Ausrichtungen der B-Achse und der C-Achse abhängen. Dadurch ergibt sich, dass auch die Strahlachse S um einen kleinen Strahlversatz verschoben aber parallel zum Idealstrahlengang 35 verläuft. Fig. 6B zeigt einen sich ergebenden TCP 3", der bzgl. des TCP 3 in Y-Richtung verschobenen ist. Man erkennt in Fig. 6B ferner den nicht mehr zentralen Durchgang der Strahlachse S durch die Strahlführungsöffnung 27 der Messdüse 21. Alternativ kann eine Verschiebung des Spiegels 15 oder der Fokussieroptik zu einem beispielsweise nahezu parallelen Strahlversatz der Strahlachse S führen.

Tritt der Eingangsstrahl nicht mehr parallel zur C-Achse ein, kann sich eine Winkelablenkung der Strahlachse S bzgl. des Idealstrahlengang 35 ergeben. Bei Rotation um die C- oder B-Achse führt dies zu einem sogenannten Strahltaumel der Strahlachse S um den Idealstrahlengang 35. In Fig. 6C sind für die Stellungen C0B90 und C0B-90 entsprechende Durchgänge der Strahlachse S durch die Messdüse 21 mit den zugehörigen TCPs 3‴ zur Verdeutlichung in einer gemeinsamen Figur dargestellt.

Die Ermittlung derartiger Fehlstellungen der Strahlachse S und, wenn möglich, deren zumindest teilweise automatisierten Korrektur wird durch das im Folgenden beschriebene Verfahren einer BC-Kalibration näher erläutert. Dabei wird es durch eine entsprechende Einstellung von Bearbeitungsparametern und ein Ausschneiden von beiden Seiten möglich, zusätzlichen Informationsgehalt in einem Antastvorgang, der von einer Seite aus erfolgt, zu gewinnen. Der Informationsgehalt kann für eine Identifikation einer möglichen B- und/oder C-Dejustage genutzt werden, so dass eine entsprechende Korrektur der Dejustage vorgenommen werden kann.

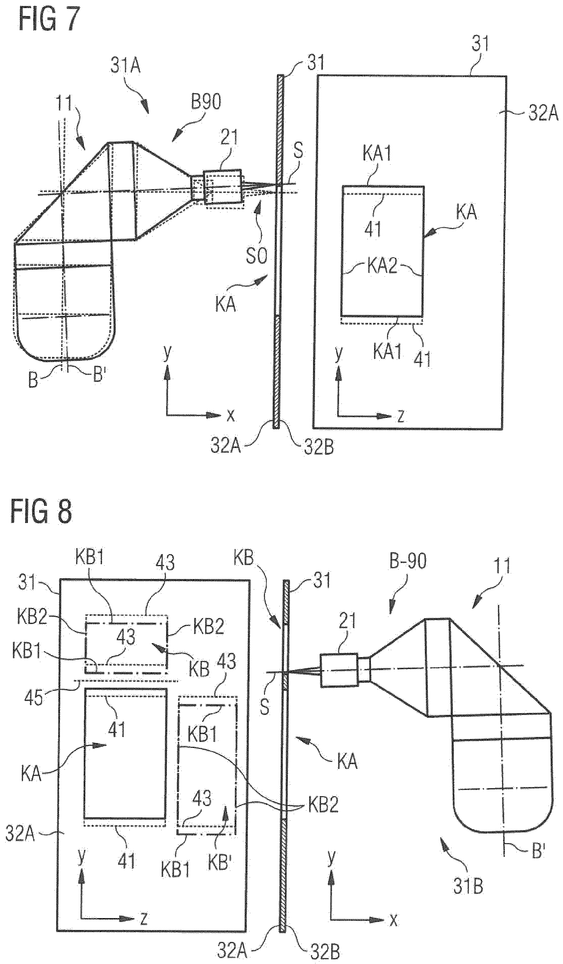

Zur Erläuterung des Verfahrens zur Bestimmung einer Abweichung einer räumlichen Ausrichtung der Strahlachse S einer Strahlbearbeitungsmaschine von einer räumlichen Soll-Ausrichtung S0 der Strahlachse (Idealstrahlengang 35) gehen die folgenden Figuren 7 und 8 beispielshaft von einer Dejustage der C-Achse (analog Fig. 6A) aus. Analoge Überlegungen und Korrekturverfahren können auch für eine Dejustage z.B. der B-Achse oder einer Überlagerung von C- und B-Achse durchgeführt werden.

Die Figuren 7 und 8 zeigen jeweils eine Aufsicht auf die X-Y-Ebene (linke Seite der Fig. 7 bzw. rechte Seite der Fig. 8) sowie eine Seitenansicht des Testwerkstücks 31 (Z-Y-Ansicht) zur Verdeutlichung des vorgenommenen Konturschnitts (rechte Seite der Fig. 7 bzw. linke Seite der Fig. 8).

Vorausgesetzt wird, dass die zu korrigierende Strahlbearbeitungsmaschine zum Halten des plattenförmigen Testwerkstücks 31 ausgebildet ist. Das Testwerkstücks 31 unterteilt entsprechend den Bearbeitungsraum in eine Vorderseite 31A und eine Rückseite 31B mit zugehörigen Oberflächen 32A, 32B des Testwerkstücks 31 (siehe auch Fig. 5), die durch im Wesentlichen eine Flächennormalenausrichtung definiert sind. Die Flächennormalenausrichtung stellt für den Fall einer plattenartigen Ausbildung des Testwerkstücks 31 mit plan-parallelen Oberflächen 32A, 32B die Orientierung der Flächennormalen auf die Oberflächen 32A, 32B der Vorderseite 31A bzw. der Rückseite 31B dar.

Der Fachmann wird anerkennen, dass beispielsweise auch eine leichte Keilform des Werkstücks, solange dies schneidbar bleibt, verwendet werden kann, da im Prinzip auch die leichte Keilform durch eine Flächennormalenausrichtung und in diesem Fall den Keilwinkel definiert ist.

Die Strahlbearbeitungsmaschine weist ferner mindestens eine, beispielsweise drei, Translationsachse zur Herstellung einer 3D-Translationsbewegung zwischen dem Testwerkstück 31 und der Strahlachse S sowie mindestens eine Rotationsachse mit einem Drehbereich von mindestens 180° zur Ausrichtung der Strahlachse in Winkelstellungen um eine Soll-Ausrichtung der Rotationsachse auf (siehe auch Fig. 1). Ein zweite beispielsweise orthogonal verlaufende Rotationsachse kann ebenfalls durch die Strahlbearbeitungsmaschine bereitgestellt werden.

Ferner umfasst die Strahlbearbeitungsmaschine ein Messelement. Im in den Figuren 7 und 8 gezeigten Fall ist dies die Messdüse 21.

Fig. 7 zeigt eine gewählte Halteposition des Testwerkstücks 31, in der die Soll-Ausrichtung (S0) der Strahlachse in einer ersten Winkelstellung B90 - gezeigt in Fig. 7 - und in einer dazu um 180° gedrehten zweiten Winkelstellung B-90 - siehe Fig. 8 - jeweils entlang der Flächennormalenausrichtung zur Bearbeitung des Testwerkstücks 31 ausgerichtet werden kann. Den Anordnungen gemäß Fig. 7 und Fig. 8 liegt also eine Drehung um die B-Achse zum Einstellen der Bearbeitungsparameter (B90, C0) in Fig. 7 bzw. (B-90, C0) in Fig. 8 zugrunde.

Für den Vorderseitenschneidvorgang (Schritt 101V) der BC-Kalibration wird der Bearbeitungskopf 11 mit der Messdüse 21 "von oben" auf der Vorderseite 31A des Testwerkstücks 31 positioniert. Der Bearbeitungskopf 11 wird dann entsprechend mit den Bearbeitungsparametern (B90, C0) ausgerichtet, so dass die Messdüse 21 auf die Oberfläche 32A des Testwerkstücks 31 gerichtet ist und der TCP 3 im Testwerkstück 31 liegt, so dass mit der Messdüse 21 eine Kontur in das Testwerkstück 31 geschnitten werden kann. Aufgrund der Fehlstellung in der C-Achse verläuft allerdings die Strahlachse S nicht orthogonal zur Oberfläche 32A des Werkstücks 31. Während des Schneidvorgangs des Schritts 101V bleibt der Bearbeitungskopf 11 auf der Vorderseite 31A des Testwerkstücks 31 und fährt eine Kontur ab.

Allgemein wird somit in Fig. 7 die Strahlachse S in einer ersten Lage positioniert, in der die Soll-Ausrichtung S0 der Strahlachse S in der ersten Winkelstellung B90 ist und die Strahlachse S auf der Vorderseite 31A des Testwerkstück 31 (nicht orthogonal) auf die Oberfläche 32A gerichtet ist. Dagegen ist in Fig. 8 die Strahlachse S in einer zweiten Lage positioniert, in der die Soll-Ausrichtung S0 der Strahlachse S in der zweiten (um 180° zur ersten Winkelstellung um die B-Achse gedrehten) Winkelstellung B-90 ist und die Strahlachse S auf der Rückseite 31B des Testwerkstück 31 (nicht orthogonal) auf die Oberfläche 32B gerichtet ist.

In Fig. 7 ist die aufgrund der Fehlstellung der C-Achse leicht zur Soll-Ausrichtung verdrehte Ist-Ausrichtung der Strahlachse S mit durchgezogenen Linien dargestellt. Zusätzlich ist zur Verdeutlichung der Fehlstellung der Strahlachse S in Fig. 7 die Positionierung der Strahlzuführung und des Bearbeitungskopf 11 im Fall der Idealjustage mit der Soll-Ausrichtung S0 der Strahlachse S grau hinterlegt.

Mit der in Fig. 7 gezeigten Winkelfehlstellung wird im Schneidvorgang (Schritt 101V) eine Kontur KA mit mindestens einem zur Soll-Ausrichtung der Rotationsachse (Nullstellung) parallel verlaufenden Vorderseitenkonturabschnitt ausgeschnitten. Dieser wird dadurch erzeugt, dass während des Schneidvorgangs einer Translationsbewegung der Strahlachse S entlang der er angenommenen Soll-Ausrichtung/Nullstellung der Rotationsachse vorgenommen wird.

Gemäß der Ansicht der Z-Y-Ebene in Fig. 7, rechte Seite, umfasst die Kontur KA beispielsweise zwei parallel zur C-Achsen-Nullstellung, d.h. entlang der Z-Achse, verlaufende Vorderseitenkonturabschnitte KA1 und zwei parallel zur (ideal ausgerichteten) B-Achsen-Nullstellung, d.h. entlang der Y-Achse, verlaufende Vorderseitenkonturabschnitte KA2, die einen rechteckigen Ausschnitt im Testwerkstück 31 bilden.

Da eine Dejustage der C-Achse vorliegt, ist die Strahlachse S trotz Einstellen der in Fig. 5 verdeutlichten Bearbeitungsparametern (B90, C0) um wenige Grad gegen den Uhrzeigersinn bzgl. der Flächennormalenausrichtung des Testwerkstücks 31 verdreht, d.h. der Laserstrahl trifft nicht senkrecht auf das Testwerkstück 31. Dies bewirkt, dass die geschnittene Kontur KA in seiner Position in (+Y)-Richtung verschoben ist. Fig. 7 zeigt in der Z-Y-Ansicht die geschnittene Kontur KA als durchgezogene Linie(n). Ergänzend ist die (Soll-)Lage des Rechtecks bei Idealjustage mit gepunkteten Linien 41 angedeutet.

Das ausgeschnittene Rechteck stellt einen Konturschnitt mit zwei Paaren von gegenüberliegenden Vorderseitenkonturabschnitten KA1, KA2 dar, die jeweils parallel zu der idealen C-bzw. der idealen B-Achse, d.h. parallel zur Z-Achse bzw. zur Y-Achse, verlaufen. Man erkennt, dass sich die Dejustage der C-Achse nicht auf die Z-Positionen der in Y-Richtung (d.h. entlang der idealen B-Achse) verlaufenden Konturabschnitte KA2 auswirkt.

Der Informationsgehalt dieser einseitig erzeugten Konturabschnitte KA1, KA2 ist insofern beschränkt, als dass er es nicht erlaubt zwischen einem Strahlversatz gemäß z.B. Fig. 6B und einem Drehstellungsfehler gemäß Fig. 6A zu differenzieren.

Für den nachfolgenden in Fig. 8 gezeigten Rückseitenschneidvorgang (Schritt 101R in Fig. 3) wird - nach einer entsprechenden Translationsbewegung - der Bearbeitungskopf 11 mit der Messdüse 21 "von oben" auf der Rückseite 31B bzgl. des Testwerkstücks 31 positioniert und die Strahlachse S um die B-Achse um 180° gedreht, so dass die Strahlachse S auf die Oberfläche 32B des Testwerkstück 31 gerichtet ist und der TCP 3 im Testwerkstück 31 liegt. D.h., für den Schritt 101R der BC-Kalibration ist der Bearbeitungskopf mit den Bearbeitungsparametern (B90, C0) ausgerichtet. Anschließend wird mit dem aus der Messdüse 21 austretendem Bearbeitungsstrahl 5 eine (oder mehrere) Rückseitenkontur(en) KB, KB' in das Testwerkstück 31 geschnitten. Allerdings verläuft die Strahlachse aufgrund der Fehlstellung auch während des Rückseitenschneidvorgangs nicht orthogonal zur Oberfläche 32B des Werkstücks 31. Während des Schneidvorgangs des Schritts 101R verbleibt der Bearbeitungskopf auf der Rückseite 31B des Testwerkstücks 31.

Mit den Bearbeitungsparametern (B-90, C0) werden z.B. zwei Rechtecke als Rückseitenkonturen KB und KB' in das Testwerkstück 31 geschnitten. Fig. 8 zeigt in der Z-Y-Ansicht die geschnittenen Rechtecke KB und KB' mit strich-punktierten Linien. Ferner ist die (Soll-)Lage der Rechtecke bei vorliegender Idealjustage mit gepunkteten Linien 43 angedeutet. Aufgrund der Dejustage der C-Achse ist die Strahlachse S trotz Einstellen der Bearbeitungsparametern (B-90, C0) ebenfalls um wenige Grad gegen den Uhrzeigersinn bzgl. der Flächennormalausrichtung des Testwerkstücks 31 verdreht. Somit trifft der Laserstrahl 5 nicht senkrecht auf des Testwerkstück 31 und die geschnittenen Rechtecke KB und KB' sind in ihren Lagen in (-Y)-Richtung bzgl. der Rechtecklagen bei Idealjustage (Linien 43) verschoben.

Eine alternative Ausgangslage für den zweiten Schneidvorgang kann beispielsweise mit den Bearbeitungsparametern (B90, C180) eingenommen werden. Letztere Drehung um die C-Achse kann beispielsweise auch in Ausgestaltungen der Strahlbearbeitungsmaschine mit nur einer Drehachse (hier der C-Achse) zur Bereitstellung von Positionen für das Schneiden der Vorder- und Rückseitenkonturen genutzt werden.

Jedes der Rechtecke KB und KB' stellt einen Konturschnitt mit jeweils zwei Paaren von gegenüberliegenden Rückseitenkonturabschnitten KB1, KB2 dar, die entsprechend parallel zu der idealen C- bzw. der idealen B-Achse verlaufen. Man erkennt, dass sich die Dejustage der C-Achse wiederum nicht auf die Z-Positionen der in Y-Richtung (d.h. entlang der idealen B-Achse) verlaufenden Konturabschnitte KB2 auswirkt.

Einen zentralen Durchgang der Strahlachse durch die Messdüse 21 angenommen nähern sich der in Z-Richtung verlaufende oberen bzw. untere Konturabschnitte KA1, KB1 des Rechtecks KA und des Rechtecks KB symmetrisch einer Mittellinie 45 zwischen den "idealen Konturabschnitten" in (+Y)- bzw. (-Y)-Richtung an. Es wird angemerkt, dass bei einem reinen Strahlversatz in der Messdüse 21 (gemäß Fig. 6B) eine Verschiebung und keine Annäherung erfolgen würde.

Die Schneidvorgänge zusammenfassend wird über die Konturabschnitte ein Informationsgehalt über Drehachsen-Dejustage und/oder Strahlversatz bereitgestellt.

Dieser wird in den nachfolgend beschriebenen Antastvorgängen und der sich anschließenden Auswertung (Schritt 103 in Fig. 3) gewonnen, wobei die Antastvorgänge von einer Seite aus, beispielsweise mit Bearbeitungsparametern (B-90, C0) von der Rückseite 31A aus, erfolgen.

Die Fig. 9 zeigt wie Fig. 8 eine Seitenansicht des Testwerkstücks 31 (Z-Y-Ansicht) zur Verdeutlichung des vorgenommenen Antastens einer Kante und eine Aufsicht auf die X-Y-Ebene (rechte Seite der Fig. 8) zur Verdeutlichung der Position der Messdüse 21. In Fig. 9 sind beispielhaft eine Antastposition 47A der Messdüse 21 beim Antasten des Konturabschnitts KA1 (Darstellung mit durchgezogenen Linien) und eine Antastposition 47B der Messdüse 21 beim Antasten des Konturabschnitts KB1 (Darstellung mit gepunkteten Linien) gezeigt.

Zum Antasten der Kanten KA1 bzw. KB1 wird der Drehpunkt 1 in einem Antastabstand XA/XB von der Oberfläche 32B des Testwerkstücks 31 positioniert, bei dem die Messdüse 21 in den jeweiligen Ausschnitt hineinragt. Der Antastabstand XA/XB ist dabei so gewählt, dass die Messdüse 21 in das ausgeschnittene Rechteck KA, KB soweit hineinragt, dass ein seitlicher Antastvorgang immer zu einer Kontaktierung der Kanten mit der Mantelfläche 23 führt. Für die Auswertung werden z.B. die zugehörigen Y- und Z-Werte des Drehpunkts 1 festgehalten. Aufgrund der zylindrischen Form der Messdüse 21 sind die Antastvorgänge nicht von der Messdüsenform beeinflusst, da sowohl ein Antasten in (+Y)- oder (-Y)-Richtung jeweils einen gleichen gemessenen Abstand zur idealen Strahlachse (d.h. der Zylinderachse durch die Messdüse 21) einbezieht.

Da sich auch die Mantelfläche 23, bzw. die zugehörige Zylinderachse der Messdüse 21, unter dem Kippwinkel zur Flächennormalenausrichtung erstreckt, wirkt sich die Verkippung - wie in Fig. 9 gezeigt - derart auf den ersten Antastvorgang aus, dass die Y-Position des Konturabschnitts KA1 ein im Vergleich zum Fall der Idealjustage größerer Y-Wert des Drehpunkts 1 zugeordnet wird. D.h., der Drehpunkt 1 kann in Y-Richtung näher an die Kante KA1, in Fig. 9 bis auf den Abstand YKA1, heranfahren, als es der Fall bei der Idealjustage wäre. Ebenso kann der Drehpunkt 1 in Y-Richtung an die Kante des Konturabschnitts KB1 näher, in Fig. 9 bis auf den Abstand YKB1, heranfahren. Daraus ergibt sich ein Ist-Abstand ΔY der Konturabschnitte KA1 und KB1.

Im zuvor beschriebenen Antastvorgang wird die gleiche Winkelstellung wie die des Rückseitenschneidvorgangs verwendet. In diesem Zusammenhang sei vermerkt, dass zwar allgemein der Vorderseitenschneidvorgang und der Rückseitenschneidvorgang bei entsprechend invertierten Winkelstellungen erfolgt, der Antastvorgang allerdings auch mit einer davon abweichenden Winkelstellung durchgeführt werden könnte, solange beide Antastkanten mit der gleichen Stellung angetastet werden.

Man erkennt: Je mehr der Ist-Abstand ΔY der Konturabschnitte KA1 und KB1 vom zugeordneten Soll-Abstand abweicht, desto größer ist die Winkelabweichung der C-Achse von der Idealjustage. Ist der Ist-Abstand ΔY größer als der Soll-Abstand, handelt es sich in der Anordnung gemäß Fig. 9 um eine Verdrehung gegen den Urzeigersinn; ist der Ist-Abstand ΔY kleiner, handelt es sich um eine Verdrehung im Urzeigersinn. Aus der Verschiebungsrichtung einer gemessenen Mitte mY zwischen den Konturabschnitten KA1 und KB1 von der Idealmittellinie kann man auf den Strahlversatz in der Messdüse 21 schließen.

Allgemein kann mithilfe der bekannten Geometrie insbesondere der Messdüse 21 aus den, für die verschiedenen Konturkanten gemessenen, X- und Z-Positionen des Drehpunkts 1 auf vorzunehmende Korrekturwinkel hinsichtlich der B- und C-Achse zurückgerechnet werden. Dabei wird durch eine rechnerische Egalisierung des koaxialen Offsets zwischen Strahlachse und Messdüse ein exaktes Vermessen der Konturabschnitte ermöglicht. Das Ergebnis der Messung ermöglicht dann unter Ausnutzung der Achsredundanzen ein Bestimmen des Kinematikfehlers, der nachfolgend in der NC-Steuerung automatisch korrigiert werden kann.

Beispielsweise errechnet die NC-Steuerung aus den Messwerten die tatsächliche Winkelposition der B-Achse und der C-Achse und zeigt die korrigierte Achsposition auf der Bedienoberfläche an. Nach Übernahme der Werte durch den Bediener setzt die Steuerung diese Achsposition als Absolutposition, d.h. als neue "Nulllage", für die weitere Werkstückbearbeitung an (Schritt 109 in Fig. 3). Eine genauere Bestimmung der neuen exakten "Nulllage" ist z.B. iterativ möglich. So kann ab einer erfassten Schwellwertabweichung von z.B. 0,02° eine Korrektur mehrfach durchgeführt werden, um auf eine Abweichung von z.B. kleiner 0,005° zu kommen.

Vorteile der hierin offenbarten Vorgehensweisen sind unter anderem die Möglichkeit zur automatisierten Bearbeitung der Testwerkstücke und zur automatisierten Vermessung im Anschluss. Ein Eingriff des Bedieners kann lediglich zum Rüsten der Messdüse und der Testwerkstücke und evtl. Korrektur der Düsenmittigkeit erforderlich sein. Die verbleibenden Schritte können automatisiert ablaufen. Dies reduziert den erforderlichen Zeitaufwand für die Überprüfung/Nachjustage der BC-Achsen, welche üblicherweise alle acht Stunden und nach jeder Kollision durchzuführen ist. Ferner kann die Fehleranfälligkeit des Messverfahrens gegenüber eine händischen Vermessung und Übernahme der Ergebnisse in die Steuerung reduziert werden.

Im beschriebenen Verfahren wurde eine Messdüse als Messmittel in Form eines taktilen Messelement verwendet. Der Fachmann kann leicht erkennen, dass sich das Verfahren ebenso mit weiteren insbesondere nicht taktilen Detektionsmethoden wie z.B. die Verwendung elektrischer, magnetischer, optischer oder akustischer Messmittel durchführen lässt. Dabei ist es insbesondere auch möglich ein Detektieren mit dem Laserstrahl selbst als Hilfsmittel zur Detektion zu nutzen.

Zwar wurden in der zuvor beschriebenen Vorgehensweise Translationsbewegungen des Bearbeitungskopfes vorgenommen, jedoch wird der Fachmann leicht erkennen, dass alternativ eine oder mehrere Translationsbewegungen ebenfalls durch eine Werkstückhalterung der Werkzeugmaschine übernommen werden können, so dass das Werkstück anstelle des Bearbeitungskopfes linear verschoben wird.

Ferner wurde im zuvor beschriebenen Beispiel die Korrektur anhand von zwei Rechtecken bestimmt, jedoch wird der Fachmann leicht erkennen, dass alternative Konturformen je nach Messvorgang und zugrundeliegender Strahlbearbeitungsmaschine genutzt werden können.

Bei Strahlbearbeitungsmaschinen mit nur einer Drehachse wird nur ein linearer Strahlabschnitt je Konturschnitt benötigt. Die Figuren 10A und 10B zeigen beispielhaft ausgeschnittene Halbkreise HA (von der Vorderseite) und HB (von der Rückseite), deren lineare Konturabschnitte entweder einen zu vermessenden, zentral angeordneten Steg ausbilden (Fig. 10A) oder ein zu vermessendes Außenmaß (Fig. 10B) bereitstellen.

In einer weiteren in Fig. 10C gezeigten Ausführungsform können sich die Halbkreise HA und HB teilweise überlappen, so dass ein Herausfahren aus den Ausschnitten, d.h. ein Bewegen der Messdüse in X-Richtung, beim Wechseln vom Antasten des Vorderseitenkonturabschnitts zum Antasten des Rückseitenkonturabschnitts nicht mehr notwendig ist.

Ferner können Strukturen für mehrere Drehachsen vorgesehen werden. Beispielsweise zeigt Fig. 11 zwei sich überlappende Vielecke VA und VB, die jeweils Konturabschnittpaare in zwei Raumrichtungen umfassen. Aufgrund der Überlappung ist auch hier ein Herausfahren der Messdüse 21 aus der Ebene des Testwerkstücks 21 nicht notwendig. Die Konturabschnitte können z.B. die zuvor beschriebene B- und C-Achsenkalibration ermöglichen.

Insbesondere mit Blick auf die in Fig. 10C und 11 gezeigten Konturbeispiele sind die Vorderseitenkontur und/oder die Rückseitenkontur nicht zwingendermaßen geschlossene Konturen, solange sich aus ihnen Konturabschnitte zum Antasten formen lassen.

Neben den hierin basierend auf drei Translationsachsen beschriebenen Ausführungsbeispielen des Verfahrens zur Achsenkalibrieren sind analog Verfahren mit z.B. zwei Translationsachsen möglich, falls nicht in die Kontur eingetaucht werden muss und beispielsweise optisch (z.B. mit einer Kamera koaxial zum Strahl) detektiert wird.

Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Verfahren zur Bestimmung einer Abweichung einer räumlichen Ausrichtung einer Strahlachse (S) einer Strahlbearbeitungsmaschine von einer räumlichen Soll-Ausrichtung (S0) der Strahlachse (S), wobei die Strahlbearbeitungsmaschine eine zu kalibrierende Rotationsachse (B, C) und ein Messmittel aufweist, wobei das Verfahren den folgenden Schritt aufweist:
Schneiden von Konturabschnitten (KA1, KB2) mit einem Bearbeitungsstrahl (5) in ein Testwerkstück (31),
**dadurch gekennzeichnet, dass** die Konturabschnitte (KA1, KB2) von zwei Seiten in das Testwerkstück (31) geschnitten werden, wobei die Konturabschnitte (KA1, KB2) zu einer Soll-Ausrichtung der zu kalibrierenden Rotationsachse (B, C) parallel verlaufen,
und dass das Verfahren ferner die folgenden Schritte aufweist:
Detektieren der Konturabschnitte (KA1, KA2) mit dem Messmittel von einer Seite des Testwerkstücks (31) zur Ermittlung der räumlichen Lage der Konturabschnitte (KA1, KB1) und
Bestimmen der Abweichung der räumlichen Ausrichtung der Strahlachse (S) der Strahlbearbeitungsmaschine von der räumlichen Soll-Ausrichtung (S0) basierend auf den räumlichen Lagen der Konturabschnitte (KA1, KB1) im Vergleich zu Soll-Lagewerten die einem Schneiden bei der Soll-Ausrichtung zugeordnet sind.

2. Verfahren nach Anspruch 1, wobei die Strahlbearbeitungsmaschine zum Bearbeiten eines Werkstücks mit einem entlang der Strahlachse (S) geführten Bearbeitungsstrahl (5) und insbesondere zum Halten eines plattenartigen Testwerkstücks (31) mit zwei durch im Wesentlichen eine gemeinsame Flächennormalenausrichtung definierten Oberflächen (32A, 32B) ausgebildet ist und wobei die Strahlbearbeitungsmaschine mindestens eine Translationsachse (X, Y, Z) zur Herstellung einer Translationsbewegung zwischen dem Testwerkstück (31) und der Strahlachse (S), mindestens eine Rotationsachse (B, C) mit einem Drehbereich von mindestens 180° zur Ausrichtung der Strahlachse (S) in Winkelstellungen um eine Soll-Ausrichtung der mindestens einen Rotationsachse (B, C) und das Messmittel, insbesondere in Form eines Messelements (21), umfasst, wobei das Verfahren die folgenden Schritte aufweist:
Bereitstellen des Testwerkstücks (31) in einer Halteposition, in der die Soll-Ausrichtung (S0) der Strahlachse (S) in einer ersten Winkelstellung (B90) und einer dazu um 180° gedrehten zweiten Winkelstellung (B-90) jeweils entlang der Flächennormalenausrichtung zur Bearbeitung des Testwerkstücks (31) ausgerichtet werden kann,
Positionieren der Strahlachse (S) in einer ersten Lage, in der die Soll-Ausrichtung (S0) der Strahlachse (S) in der ersten Winkelstellung (B90) ist und der Bearbeitungsstrahl (5) auf eine der Oberflächen (32A) gerichtet ist,
Durchführen eines ersten Konturschnitts (KA) mit dem Bearbeitungsstrahl (5) mit einem zur Soll-Ausrichtung der Rotationsachse (B, C) parallel verlaufenden Vorderseitenkonturabschnitt (KA1),
Positionieren der Strahlachse in einer zweiten Lage, in der die Soll-Ausrichtung (S0) der Strahlachse in der zweiten Winkelstellung (B-90) ist und der Bearbeitungsstrahl (5) auf die andere der Oberflächen (32A) gerichtet ist,
Durchführen eines zweiten Konturschnitts (KB) mit dem Bearbeitungsstrahls (5) mit einem zur Soll-Ausrichtung der Rotationsachse (B, C) und damit zum Vorderseitenkonturabschnitt (KA1) parallel verlaufenden Rückseitenkonturabschnitt (KB1),
Formen mindestens einer an den Vorderseitenkonturabschnitt (KA1) und/oder an den Rückseitenkonturabschnitt (KB1) angrenzenden Aussparung im Werkstück (31),
Detektieren, insbesondere Antasten, des Vorderseitenkonturabschnitts (KA1) und des Rückseitenkonturabschnitt (KB1) mit dem Messmittel, welches insbesondere im Bereich des Austritts des Bearbeitungsstrahls als Messelement (21) vorgesehen ist, mit der gleichen Winkelstellung (B-90) zur Ermittlung der räumlichen Lage des Vorderseitenkonturabschnitts (KA1) und der räumlichen Lage des Rückseitenkonturabschnitts (KB1) und
Ableiten der Abweichung der räumlichen Ausrichtung der Strahlachse (S) der Strahlbearbeitungsmaschine von der räumlichen Soll-Ausrichtung (S0) basierend auf der räumlichen Lage des Vorderseitenkonturabschnitts (KA1) und der räumlichen Lage des Rückseitenkonturabschnitts (KB1).

3. Verfahren nach Anspruch 1 oder 2, wobei beim Durchführen des ersten Konturschnitts (KA) und des zweiten Konturschnitts (KB) Strahlführungskomponenten der Strahlbearbeitungsmaschine auf einer durch die eine der Oberflächen (32A) abgegrenzte Vorderseite (31A) bzw. durch die andere der Oberflächen (32B) abgegrenzte Rückseite (31B) positioniert werden und beim Detektieren, insbesondere Antasten, die Strahlführungskomponenten entweder auf der Vorderseite (31A) oder der Rückseite (31B) positioniert werden.

4. Verfahren nach einem der vorhergehenden Ansprüche, wobei das Ableiten der Abweichung umfasst
ein Ermitteln eines Abstandsmaßes (ΔY) zwischen den Konturabschnitten, insbesondere zwischen dem Vorderseitenkonturabschnitt (KA1) und dem Rückseitenkonturabschnitt (KB1), und
ein Bestimmen einer Differenz zwischen dem ermittelten Abstandsmaß (ΔY) und einem den Konturabschnitten (KA1, KB1) zugrunde liegenden Soll-Abstandsmaß, dem die räumliche Soll-Ausrichtung (S0) der Strahlachse (S) zugrunde liegt.

5. Verfahren nach einem der Ansprüche 2 bis 4, wobei ferner die Abweichung der räumlichen Ausrichtung der Strahlachse (S) der Strahlbearbeitungsmaschine von der räumlichen Soll-Ausrichtung (S0) in einer Ebene bestimmt wird, die senkrecht zur Flächennormalenausrichtung und senkrecht zur Soll-Ausrichtung der Rotationsachse (B, C) ist, und damit insbesondere senkrecht zu den Konturabschnitten (KA1, KB1) ist.

6. Verfahren nach einem der Ansprüche 2 bis 5, wobei mindestens einer der Konturschnitte (KA, KB) zur Erzeugung einer Aussparung geformt ist, und
wobei insbesondere der Vorderseitenkonturschnitt (KA) und der Rückseitenkonturschnitt (KB) geschlossene Konturen sind, die derart nebeneinander angeordnet sind, dass der Vorderseitenkonturabschnitt (KA) und der Rückseitenkonturabschnitt (KB) durch einen Steg des Testwerkstücks (31) getrennt voneinander und insbesondere nebeneinander angeordnet sind oder durch einen Steg des Testwerkstücks (31) und beidseitig angrenzende ausgeschnittene Bereiche getrennt voneinander und insbesondere nebeneinander angeordnet sind.

7. Verfahren nach einem der Ansprüche 2 bis 5, wobei der Vorderseitenkonturschnitt (KA) und der Rückseitenkonturschnitt (KB) ineinandergreifen oder gemeinsam eine geschlossene Kontur formen, bei der der Vorderseitenkonturabschnitt (KA1) und der Rückseitenkonturabschnitt (KB1) auf gegenüber liegenden Seiten eines ausgeschnittenen Bereichs angeordnet sind.

8. Verfahren nach einem der vorhergehenden Ansprüche, wobei die Strahlbearbeitungsmaschine zwei Rotationsachsen (B, C) aufweist, deren Soll-Ausrichtungen zueinander orthogonal angeordnet sind und wobei Konturschnitte (KA, KB) für jede der Soll-Ausrichtungen der Rotationsachsen (B, C) ein Paar von parallelen Konturabschnitten (KA1, KB1; KA2, KB2) auf weist, die jeweils parallel zur entsprechenden Soll-Ausrichtung sind.

9. Verfahren nach einem der vorhergehenden Ansprüche, ferner mit den Schritten
Bereitstellen des Messmittels insbesondere als eine Messdüse (21) oder als Messdüsenaufsatz, wobei das Messmittel im Bereich des Austritts des Bearbeitungsstrahls (5) angeordnet ist und eine geometrisch zur Strahlachse definierte Kontaktfläche (23) aufweist, und
Durchführen des Detektierens durch Antasten der Konturabschnitte (KA1, KB2) mit der Kontaktfläche (23).

10. Verfahren nach Anspruch 9, wobei die Kontaktfläche (23) in und entgegen der Rotationsrichtung der zu kalibrierenden Rotationsachse geometrisch definiert ist und sich insbesondere parallel zur Soll-Ausrichtung (S0) der Strahlachse (S) erstreckt, und wobei die Kontaktfläche (23) sich insbesondere zylindersymmetrisch um die Soll-Ausrichtung (S0) der Strahlachse (S) ausgebildet ist, wodurch insbesondere für jeden der Antastvorgänge ein identischer Abstand zur Soll-Ausrichtung (S0) gegeben ist, und mit den Schritten
Bestimmen einer Mitte (mY) zwischen den Konturabschnitten (KA1, KB2) und
Vergleichen der Mitte (mY) mit einer Soll-Mitte (45) zur Bestimmung eines Strahlversatzes des Bearbeitungsstrahls zur Soll-Ausrichtung (S0).

11. Strahlbearbeitungsmaschine zum Bearbeiten eines Werkstücks mit
einer Werkstückhalterung zum Positionieren eines Werkstücks, insbesondere eines Testwerkstücks (31),
einem Strahlführungssystem zum Bereitstellen eines entlang einer Strahlachse (S) geführten Bearbeitungsstrahls (5), wobei die Strahlbearbeitungsmaschine mindestens eine Translationsachse (X, Y, Z) zur Herstellung einer Translationsbewegung zwischen dem Testwerkstück (31) und der Strahlachse (S), mindestens eine Rotationsachse (B, C) mit einem Drehbereich von mindestens 180° zur Ausrichtung der Strahlachse (S) in Winkelstellungen um eine Soll-Ausrichtung der mindestens einen Rotationsachse (B, C),
einem Messmittel zum Detektieren, insbesondere einem Messelement (21) zum Antasten, einer Schnittkante **gekennzeichnet durch**
eine Steuerungsvorrichtung zum Durchführen des Verfahrens nach einem der vorhergehenden Ansprüche.

12. Strahlbearbeitungsmaschine nach Anspruch 11, wobei das Messmittel, welches insbesondere im Bereich des Austritts des Bearbeitungsstrahls als Messelement (21) vorgesehen ist, als Messdüse oder als Messdüsenansatz an einem Bearbeitungskopf im Bereich des Austritts des Bearbeitungsstrahls (5) anbringbar ist und eine geometrisch zur Soll-Strahlachse (S0) definierte Kontaktfläche (23) aufweist.

13. Strahlbearbeitungsmaschine nach Anspruch 11 oder Anspruch 12, wobei das Messelement eine sich parallel zur Bearbeitungsachse (5) erstreckende Kontaktfläche (23) zum Anfahren von Kantenabschnitten (KA1, KB1) des Werkstücks (31) aufweist und die Kontaktfläche (23) insbesondere eine Zylindermantelfläche ist, die sich im Abstand R um die eine Zylinderachse bildende B Soll-Strahlachse (S0) erstreckt.

14. Strahlbearbeitungsmaschine nach einem der Ansprüche 11 bis 13, wobei das Strahlführungssystem ferner zur Bereitstellung eines Soll-Laserstrahlengangs ausgebildet ist,
der sich entlang einer der Rotationsachsen (C) bis zu einem ersten Ablenkspiegel (13), entlang einer zweiten der Rotationsachsen (B) bis zu einem zweiten Ablenkspiegel (15) und anschließend entlang eines Idealstrahlengangs (35) durch eine Düse erstreckt,
wobei das Strahlführungssystem mindestens ein Winkelgetriebe aufweist, das derart ausgebildet ist, dass der erste Ablenkspiegel (13) um die zweite Drehachse (C) und/oder der zweiten Ablenkspiegel (15) um die erste Drehachse (B) rotierbar sind.

## Claims

1. A method for determining a deviation of a spatial orientation of a beam axis (S) of a beam processing machine from a spatial nominal orientation (S0) of the beam axis (S), the beam processing machine having an axis of rotation (B, C) to be calibrated and a measuring device, the method comprising the following step:
cutting contour sections (KA1, KB2) with a processing beam (5) into a test workpiece (31),
**characterized in that** the contour sections (KA1, KB2) are cut from two sides into a test workpiece (31), wherein the contour sections (KA1, KB2) extend parallel to a nominal orientation of the rotation axis (B, C) to be calibrated,
and that the method further comprises the following steps
detecting the contour sections (KA1, KA2) with the measuring device from one side of the test workpiece (31) to determine the spatial position of the contour sections (KA1, KB1), and
determining the deviation of the spatial orientation of the beam axis (S) of the beam processing machine from the spatial nominal orientation (S0) based on the spatial positions of the contour sections (KA1, KB1) in comparison with nominal position values assigned to a cutting during the nominal orientation.

2. The method of claim 1, wherein the beam processing machine is configured for processing a workpiece with a processing beam (5) guided along the beam axis (S) and in particular for supporting a plate-type test workpiece (31) with two surfaces (32A, 32B) defined by substantially a common orientation of the surface normal, and wherein the beam processing machine includes at least one translation axis (X, Y, Z) for generating a translational movement between the test workpiece (31) and the beam axis (S), at least one rotation axis (B, C) with a rotation range of at least 180° for aligning the beam axis (S) in angular positions about a nominal orientation of the at least one rotation axis (B, C), and the measuring device, in particular in the form of a measuring element (21), the method comprising the following steps:
providing the test workpiece (31) in a support position in which the nominal orientation (S0) of the beam axis (S) can be aligned in a first angular position (B90) and a second angular position (B-90) rotated 180° thereto respectively along the orientation of the surface normal for processing the test workpiece (31),
positioning the beam axis (S) in a first position, in which the nominal orientation (S0) of the beam axis (S) is in the first angular position (B90) and the processing beam (5) is directed onto one of the surfaces (32A),
performing a first contour cut (KA) with the processing beam (5) having a front side contour section (KA1) extending parallel to the nominal orientation of the rotation axis (B, C),
positioning the beam axis in a second position, in which the nominal orientation (S0) of the beam axis is in the second angular position (B-90) and the processing beam (5) is directed onto the other one of the surfaces (32A),
performing a second contour cut (KB) with the processing beam (5) having a rear side contour section (KB1) extending parallel to the nominal orientation of the rotation axis (B, C) and, thus, parallel to the front side contour section (KA1),
forming at least one recess in the workpiece (31) that borders on the front side contour section (KA1) and/or the rear side contour section (KB1),
detecting, in particular probing, the front side contour section (KA1) and the rear side contour section (KB1) with the measuring device, which is provided in particular in the region of the exit of the processing beam as measuring element (21), with the same angular position (B-90) for detecting the spatial position of the front side contour section (KA1) and the spatial position of the rear side contour section (KB1), and
deriving the deviation of the spatial orientation of the beam axis (S) of the beam processing machine from the spatial nominal orientation (S0) based on the spatial position of the front side contour section (KA1) and the spatial position of the rear side contour section (KB1).

3. The method of claim 1 or 2, wherein, when the first contour cut (KA) and the second contour cut (KB) are performed, beam guiding components of the beam processing machine are positioned at a front side (31A) delimited by one of the surfaces (32A) or at a rear side (31B) delimited by the other one of the surfaces (32B) and, during detection, in particular probing, the beam guiding components are positioned either at the front side (31A) or the rear side (31B).

4. The method of any one of the preceding claims, wherein the deriving of the deviation comprises
detecting a distance dimension (ΔY) between the contour sections, in particular between the front side contour section (KA1) and the rear side contour section (KB1), and
determining a difference between the detected distance dimension (ΔY) and a nominal distance dimension underlying the contour sections (KA1, KB1), which is based on the spatial nominal orientation (S0) of the beam axis (S).

5. The method of any one of claims 2 to 4, wherein the deviation of the spatial orientation of the beam axis (S) of the beam processing machine from the spatial nominal orientation (S0) is further determined in a plane that is perpendicular to the orientation of the surface normal and perpendicular to the nominal orientation of the axis of rotation (B, C), and that is, thus, in particular perpendicular to the contour sections (KA1, KB1).

6. The method of any one of claims 2 to 5, wherein at least one of the contour cuts (KA, KB) is formed to create a recess, and
wherein in particular the front side contour cut (KA) and the rear side contour cut (KB) are closed contours, which are arranged next to one another in such a way that the front side contour section (KA) and the rear side contour section (KB) are arranged to be separated by a bar of the test workpiece (31) from one another and are in particular arranged next to one another or are arranged to be separated from one another by a bar of the test workpiece (31) and cut out regions adjacent on both sides, and are arranged in particular next to one another.

7. The method of any one of claims 2 to 5, wherein the front side contour cut (KA) and the rear side contour cut (KB) mesh or together form a closed contour in which the front side contour section (KA1) and the rear side contour section (KB1) are disposed on opposite sides of a cut-out region.

8. The method of any one of the preceding claims, wherein the beam processing machine has two rotation axes (B, C) whose nominal orientations are arranged orthogonally to one another, and wherein contour cuts (KA, KB) for each of the nominal orientations of the rotation axes (B, C) have a pair of parallel contour sections (KA1, KB1; KA2, KB2), which are each parallel to the corresponding nominal orientation.

9. The method of any one of the preceding claims, further comprising the steps of
providing the measuring device, in particular as a measuring nozzle (21) or as a measuring nozzle extension, the measuring device being arranged in the region of the outlet of the processing beam (5) and having a contact surface (23) defined geometrically to the beam axis, and
performing the detection by probing the contour sections (KA1, KB2) with the contact surface (23).

10. The method of claim 9, wherein the contact surface (23) is geometrically defined in and against the direction of rotation of the axis of rotation to be calibrated and extends in particular parallel to the nominal orientation (S0) of the beam axis (S), and wherein the contact surface (23) is formed in particular cylinder-symmetrically about the nominal orientation (S0) of the beam axis (S), whereby in particular for each of the probing procedures an identical distance to the nominal orientation (S0) is given, and comprising the steps of
determining a center (mY) between the contour sections (KA1, KB2) and
comparing the center (mY) with a nominal center (45) to determine a beam offset of the processing beam with respect to the nominal orientation (S0).

11. A beam processing machine for processing a workpiece comprising:
a workpiece support for positioning a workpiece, in particular a test workpiece (31),
a beam guiding system for providing a processing beam (5) guided along a beam axis (S), the beam processing machine having at least one translation axis (X, Y, Z) for producing a translation movement between the test workpiece (31) and the beam axis (S), at least one rotation axis (B, C) with a rotation range of at least 180° for orienting the beam axis (S) in angular positions about a nominal orientation of the at least one rotation axis (B, C),
a measuring device for detecting, in particular a measuring element (21) for probing, a cutting edge,
**characterized by**
a control device for performing the method of anyone of the preceding claims.

12. The beam processing machine of claim 11, wherein the measuring device, which is provided in particular in the region of the outlet of the processing beam as a measuring element (21), is attachable as a measuring nozzle or as a measuring nozzle extension to a processing head in the region of the outlet of the processing beam (5) and has a contact surface (23) defined geometrically to the nominal beam axis (S0).

13. The beam processing machine of claim 11 or claim 12, wherein the measuring element has a contact surface (23) extending parallel to the processing axis (5) for approaching edge sections (KA1, KB 1) of the workpiece (31) and the contact surface (23) is in particular a cylinder shell surface that extends at a distance R about the nominal beam axis (S0) forming a cylinder axis.

14. The beam processing machine of any one of claims 11 to 13, wherein the beam guiding system is further adapted to provide a nominal laser beam path,
which extends along one of the rotation axes (C) to a first deflecting mirror (13), along a second one of the rotation axes (B) to a second deflecting mirror (15) and then along an ideal beam path (35) through a nozzle,
wherein the beam guiding system comprises at least one angular gear that is designed such that the first deflection mirror (13) is rotatable about the second axis of rotation (C) and/or the second deflection mirror (15) is rotatable about the first axis of rotation (B).

## Revendications

1. Procédé de détermination d'un écart d'une orientation spatiale d'un axe de faisceau (S) d'une machine à usiner par faisceau par rapport à une orientation théorique spatiale (S0) de l'axe de faisceau (S), sachant que la machine à usiner par faisceau comporte un axe de rotation (B, C) à étalonner et un moyen de mesure, sachant que le procédé comporte l'étape suivante :
découpe de sections de contour (KA1, KB2) avec un faisceau d'usinage (5) dans une pièce d'essai (31),
**caractérisé en ce que** les sections de contour (KA1, KB2) sont découpées des deux côtés dans la pièce d'essai (31), sachant que les sections de contour (KA1, KB2) passent parallèlement à une orientation théorique de l'axe de rotation à étalonner (B, C),
et **en ce que** le procédé comporte en plus les étapes suivantes :
détection des sections de contour (KA1, KA2) avec le moyen de mesure d'un côté de la pièce d'essai (31) pour déterminer la position spatiale des sections de contours (KA1, KB1), et
détermination de l'écart de l'orientation spatiale de l'axe de faisceau (S) de la machine à usiner par faisceau par rapport à l'orientation théorique spatiale (S0) en se basant sur les positions spatiales des sections de contour (KA1, KB1) en comparaison des valeurs de position théoriques qui sont attribuées à une découpe pour l'orientation théorique.

2. Procédé selon la revendication 1, sachant que la machine à usiner par faisceau est constituée pour l'usinage d'une pièce avec un faisceau d'usinage (5) guidé le long de l'axe de faisceau (S) et en particulier pour maintenir une pièce d'essai (31) en forme de plaque avec deux surfaces (32A, 32B) définies pour l'essentiel par une orientation normale de surface commune et sachant que la machine à usiner par faisceau comprend au moins un axe de translation (X, Y, Z) pour la réalisation d'une course de translation entre la pièce d'essai (31) et l'axe de faisceau (S), au moins un axe de rotation (B, C) avec une plage de rotation d'au moins 180° pour orienter l'axe de faisceau (S) dans des positions angulaires autour d'une orientation théorique d'au moins un axe de rotation (B, C) et le moyen de mesure, en particulier sous la forme d'un élément de mesure (21), sachant que le procédé comporte les étapes suivantes :
fourniture de la pièce d'essai (31) dans une position de maintien dans laquelle l'orientation théorique (S0) de l'axe de faisceau (S) peut être orientée dans une première position angulaire (B90) et une deuxième position angulaire (B-90) tournée de 180° à cet effet respectivement le long de l'orientation normale de surface pour l'usinage de la pièce d'essai (31),
positionnement de l'axe de faisceau (S) dans une première position dans laquelle l'orientation théorique (S0) de l'axe de faisceau (S) est dans la première position angulaire (B90) et le faisceau d'usinage (5) est dirigé sur une des surfaces (32A),
exécution d'une première découpe de contour (KA) avec le faisceau d'usinage (5) avec une section de contour de face avant (KA1) passant parallèlement à l'orientation théorique de l'axe de rotation (B, C),
positionnement de l'axe de faisceau dans une deuxième position, dans laquelle l'orientation théorique (S0) de l'axe de faisceau est dans la deuxième position angulaire (B-90) et le faisceau d'usinage (5) est dirigé sur l'autre des surfaces (32A),
exécution d'une deuxième découpe de contour (KB) avec le faisceau d'usinage (5) avec une section de contour de face arrière (KB1) passant parallèlement à l'orientation théorique de l'axe de rotation (B, C) et de ce fait à la section de contour de face avant (KA1), formation d'au moins un évidement dans la pièce (31), limitrophe de la section de contour de face avant (KA1) et/ou de la section de contour de face arrière (KB1), détection, en particulier palpage, de la section de contour de face avant (KA1) et de la section de contour de face arrière (KB1) avec le moyen de mesure, laquelle est prévue en particulier dans la zone de sortie du faisceau d'usinage en tant qu'élément de mesure (21), avec la même position angulaire (B-90) pour déterminer la position spatiale de la section de contour de face avant (KA1) et de la position spatiale de la section de contour de face arrière (KB1), et
déduction de l'écart de l'orientation spatiale de l'axe de faisceau (S) de la machine à usiner par faisceau par rapport à l'orientation théorique spatiale (S0) en se basant sur la position spatiale de la section de contour de face avant (KA1) et de la position spatiale de la section de contour de face arrière (KB1).

3. Procédé selon la revendication 1 ou 2, sachant qu'en exécutant la première découpe de contour (KA) et la deuxième découpe de contour (KB), les composants de guidage de faisceau de la machine à usiner par faisceau sont positionnés sur une face avant (31A) délimitée par une des surfaces (32A) ou par la face arrière (31B) délimitée par l'autre des surfaces (32B) et lors de la détection, en particulier du palpage, les composants de guidage de faisceau sont positionnés soit sur la face avant (31A) soit sur la face arrière (31B).

4. Procédé selon l'une quelconque des revendications précédentes, sachant que la déduction de l'écart comprend
une détermination d'une mesure de distance (ΔY) entre les sections de contour, en particulier entre la section de contour de face avant (KA1) et la section de contour de face arrière (KB1), et
une détermination d'une différence entre la mesure de distance (ΔY) déterminée et une mesure de distance théorique à la base des sections de contour (KA1, KB1), sur laquelle est basée l'orientation thorique spatiale (S0) de l'axe de faisceau (S).

5. Procédé selon l'une quelconque des revendications 2 à 4, sachant en plus que l'écart de l'orientation spatiale de l'axe de faisceau (S) de la machine à usiner par faisceau est déterminé par l'orientation théorique spatiale (S0) dans un plan qui est perpendiculaire à l'orientation normale de surface et perpendiculaire à l'orientation théorique de l'axe de rotation (B, C) et est de ce fait en particulier perpendiculaire aux sections de contour (KA1, KB1).

6. Procédé selon l'une quelconque des revendications 2 à 5, sachant qu'au moins une des découpes de contour (KA, KB) est formée pour produire un évidement, et
sachant en particulier que la découpe de contour de face avant (KA) et la découpe de contour de face arrière (KB) sont des contours fermés, qui sont disposés les uns à côté des autres de telle manière que la section de contour de face avant (KA) et la section de contour de face arrière (KB) sont disposées séparées l'une de l'autre par une nervure de la pièce d'essai (31) et en particulier l'une à côté de l'autre ou sont disposées séparées l'une de l'autre par une nervure de la pièce d'essai (31) et des zones découpées limitrophes des deux côtés et en particulier l'une à côté de l'autre.

7. Procédé selon l'une quelconque des revendications 2 à 5, sachant que la découpe de contour de face avant (KA) et la découpe de contour de face arrière (KB) viennent en prise l'une dans l'autre ou forment ensemble un contour fermé pour lequel la section de contour de face avant (KA1) et la section de contour de face arrière (KB1) sont disposées sur les côtés opposés d'une zone découpée.

8. Procédé selon l'une quelconque des revendications précédentes, sachant que la machine à usiner par faisceau comporte deux axes de rotation (B, C), dont les orientations théoriques sont disposées de façon orthogonale l'une par rapport à l'autre et sachant que les découpes de contour (KA, KB) comportent pour chacune des orientations théoriques des axes de rotation (B, C) une paire de sections de contour parallèles (KA1, KB1 ; KA2, KB2), qui sont respectivement parallèles à l'orientation théorique correspondante.

9. Procédé selon l'une quelconque des revendications précédentes, avec en plus les étapes de
fourniture du moyen de mesure, en particulier en sous la forme d'une buse de mesure (21) ou sous la forme d'un embout de buse de mesure, sachant que le moyen de mesure est disposé dans le secteur de la sortie du faisceau d'usinage (5) et un comporte une surface de contact (23) définie géométriquement par rapport à l'axe de faisceau, et
exécution de la détection par palpage des sections de contour (KA1, KB2) avec la surface de contact (23).

10. Procédé selon la revendication 9, sachant que
la surface de contact (23) est géométriquement définie dans la et contrairement à la direction de rotation de l'axe de rotation à étalonner et s'étend en particulier parallèlement à l'orientation théorique (S0) de l'axe de faisceau (S) et sachant que la surface de contact (23) s'est constituée en particulier de façon symétriquement cylindrique à l'orientation théorique (S0) de l'axe de faisceau (S), une distance identique par rapport à l'orientation théorique (S0) étant donnée de ce fait en particulier pour chacune des opérations de palpage et avec les étapes de
détermination d'un centre (mY) entre les sections de contour (KA1, KB2), et
comparaison du centre (mY) à un centre théorique (45) pour détermination d'un déport de faisceau du faisceau d'usinage par rapport à l'orientation théorique (S0).

11. Machine à usiner par faisceau pour usiner une pièce avec
un porte-pièce pour positionner une pièce, en particulier une pièce d'essai (31),
un système de guidage de faisceau pour fournir un faisceau d'usinage (5) guidé le long d'un axe de faisceau (S), sachant que la machine à usiner par faisceau comporte au moins un axe de translation (X, Y, Z) pour la réalisation d'une course de translation entre la pièce d'essai (31) et l'axe de faisceau (S), au moins un axe de rotation (B, C) avec une plage de rotation d'au moins 180° pour l'orientation de l'axe de faisceau (S) dans des positions angulaires pour l'orientation théorique d'au moins un axe de rotation (B, C),
un moyen de mesure pour détecter, en particulier un élément de mesure (21) pour palper, une arête de découpe, **caractérisée par**
un dispositif de commande pour exécuter le procédé selon l'une quelconque des revendications précédentes.

12. Machine à usiner par faisceau selon la revendication 11, sachant que le moyen de mesure, lequel est prévu en particulier dans le secteur de la sortie du faisceau d'usinage en tant qu'élément de mesure (21), peut être mis en place en tant que buse de mesure ou embout de buse de mesure sur une tête d'usinage dans le secteur de la sortie du faisceau d'usinage (5) et comporte une surface de contact (23) définie géométriquement par rapport à l'axe de faisceau théorique (S0).

13. Machine à usiner par faisceau selon la revendication 11 ou la revendication 12, sachant que l'élément de mesure comporte une surface de contact (23) s'étendant parallèlement à l'axe d'usinage (5) pour approcher les sections d'arête (KA1, KB1) de la pièce (31) et la surface de contact (23) est en particulier une surface d'enveloppe cylindrique, qui s'étend à une distance R de l'axe de faisceau théorique B (S0) formant un axe cylindrique.

14. Machine à usiner par faisceau selon l'une quelconque des revendications 11 à 13, sachant que le système de guidage de faisceau est constitué en plus pour fournir une trajectoire de faisceau laser théorique,
qui s'étend le long d'un des axes de rotation (C) jusqu'à un premier niveau de déflexion (13), le long d'un deuxième des axes de rotation (B) jusqu'à un deuxième niveau de déflexion (15) et ensuite le long d'une trajectoire de faisceau idéale (35) à travers une buse,
sachant que le système de guidage de faisceau comporte au moins un renvoi d'angle, qui est constitué de manière à ce que le premier niveau de déflexion (13) puisse tourner autour du deuxième axe de rotation (C) et/ou le deuxième niveau de déflexion (15) puisse tourner autour du premier axe de rotation (B).
